# EUROPÄISCHE PATENTSCHRIFT

(11) **EP 1 518 069 B1**
(45) Veröffentlichungstag und Bekanntmachung des Hinweises auf die Patenterteilung: **22.04.2009**
(21) Anmeldenummer: 03738096.1
(22) Anmeldetag: 27.06.2003
(51) Int. Cl.: F16L 25/00, F16L 15/00, F16L 15/04, F16L 37/248, F23J 13/04

(54) **ABDICHTUNG FÜR EINE EINSTECKVERBINDUNG BEI ROHREN**
SEAL FOR A PUSH-IN CONNECTION FOR PIPES
SYSTEME D'ETANCHEITE POUR UN RACCORDEMENT DE TUBES PAR INSERTION

(30) Priorität: 28.06.2002 DE 20210002 U
(43) Veröffentlichungstag der Anmeldung: 30.03.2005
(73) Patentinhaber: Joseph Raab GmbH & Cie. KG, 56566 Neuwied (DE)
(72) Erfinder: FISCHER, Günter, 85622 Feldkirchen (DE); KARB, Heiner, 51597 Morsbach-Lichtenberg (DE)
(74) Vertreter: Tiesmeyer, Johannes
(86) Internationale Anmeldenummer: PCT/EP2003/006852
(87) Internationale Veröffentlichungsnummer: WO 2004/003417

(56) Entgegenhaltungen:
- EP-A- 1 020 684
- DE-A- 19 547 901
- GB-A- 2 244 773

## Beschreibung

Die Erfindung betrifft eine Rohrsystem, insbesondere Abgasrohrsystem, mit Rohrelementen, die in Reihe miteinander verbindbar sind, wobei an der Verbindungsstelle zweier aufeinander folgender Rohrelemente ein erstes der beiden Rohrelemente mit einem axialen Einsteck-Endabschnitt in einen axialen Aufnahme-Endabschnitt des zweiten Rohrelementes eingeführt ist, so dass die Endabschnitte der Rohrelemente im Verbindungsbereich einander radial überlappen.

Derartige Abgasrohrsysteme oder Kaminrohrsysteme sind bekannt. So ist z.B. in der EP 0 522 410 A1 ein gattungsgemäßes Rohrsystem beschrieben, bei dem aneinander angeschlossene Rohrelemente an ihrer Verbindungsstelle miteinander verschraubt sind, wobei der Einsteck-Endabschnitt des ersten Rohrelementes mit einem Außengewinde versehen ist, welches in ein am Aufnahme-Endabschnitt des anderen Rohrelementes ausgebildetes Innengewinde einschraubbar ist.

Bei einem aus der WO 9633364 bekannten Rohrsystem der hier betrachteten Art erfolgt die Sicherung der Verbindung zweier Rohrelemente durch eine bajonettverschlussartige Verriegelung.

Bekannt sind auch kreiszylindrische Muffensteckverbindungen sowie konische Steckverbindungen von Rohrelementen, beispielsweise gemäß der DE 198 00 512 C2 oder gemäß der DE 195 47 677 C2.

Eine Schwierigkeit bei der Herstellung von Rohrsträngen aus solchen Rohrelementen besteht darin, die Verbindungsstellen mit einfachen Mitteln mechanisch stabil und gasdicht zu realisieren. Insbesondere bei Rohrleitungen, die ein Medium, etwa Abgas, unter erhöhtem Druck und/oder erhöhter Temperatur leiten sollen, ist das Problem der wirksamen Abdichtung besonders relevant.

Der Erfindung liegt daher die Aufgabe zugrunde, ein Rohrsystem der eingangs genannten Art bereitzustellen, bei dem mit einfachen Mitteln eine wirksame Abdichtung von Verbindungsstellen aneinander angefügter Rohrelemente erreicht werden kann.

Zur Lösung dieser Aufgabe wird erfindungsgemäß vorgeschlagen, dass die Rohrelemente so dimensioniert sind, dass sie in dem Bereich radialer Überlappung der axialen Endabschnitte an der Verbindungsstelle mit ihren einander gegenüberliegenden Umfangswänden einen Ringraum zur Aufnahme einer Dichtung begrenzen, wobei der Ringraum axial von einem am Einsteck-Endabschnitt vorgesehenen ersten radialen Vorsprung auf einer Seite und von einem am Aufnahme-Endabschnitt vorgesehenen zweiten radialen Vorsprung auf der anderen Seite begrenzt ist, und wobei die radialen Vorsprünge in axialer Richtung einander annäherbar - und vorzugsweise relativ zueinander arretierbar sind, um eine in dem Ringraum aufgenommene Dichtung an entgegengesetzten Seiten zu beaufschlagen.

Bei einem Rohrsystem nach der Erfindung kann der Ringraum an der Verbindungsstelle zweier aufeinander folgender Rohrelemente in seiner axialen Dimension dadurch verkleinert werden, dass der Einsteck-Endabschnitt des einen Rohrelementes weiter in den axialen Aufnahme-Endabschnitt des andere Rohrelementes eingeführt wird, wobei die radialen Vorsprünge der Endabschnitte aufeinander zu bewegt werden. Eine zwischen diesen radialen Vorsprüngen in dem Ringraum aufgenommene und auf dem Einsteck-Endabschnitt des ersten Rohrelements aufsitzende Ringdichtung wird dabei von den radialen Vorsprüngen der beiden Rohrelemente auf Druck belastet, so dass sie sich dicht abschließend an den Innenflächen des Ringraumes abstützt.

Aus herstellungstechnischen Gründen wird eine Ausführungsform der Erfindung favorisiert, bei der der axiale Aufnahme- Endabschnitt im Bereich des betreffenden axialen Randes des zweiten Rohrelementes unter Bildung oder Einbeziehung des zweiten radialen Vorsprungs zu einem Abschnitt für die radial äußere Begrenzung des Ringraumes aufgeweitet ist, wohingegen der erste radiale Vorsprung mit axialem Abstand vom betreffenden axialen Rand des ersten Rohrelementes an dem Einsteck-Endabschnitt vorgesehen ist. Abgesehen von der muffenartigen Aufweitung ist der axiale Aufnahme-Endabschnitt eines Rohrelementes vorzugsweise passend so dimensioniert, dass er den Einsteck-Endabschnitt eines anderen Rohrelementes aufnehmen kann, wobei der Einsteck-Endabschnitt mit seinem Außenumfang an dem Innenumfang des Aufnahme-Endabschnitts im Wesentlichen umlaufend anliegt. In dem aufgeweiteten Muffenabschnitt ist die stirnseitige Öffnung des Aufnahme-Endabschnittes jedoch größer, und zwar so groß, dass sie den Einsteck-Endabschnitt und eine den Einsteck-Endabschnitt umgebende Dichtung aufnehmen kann. Bei zusammengesteckten Endabschnitten liegt die Dichtung dann radial zwischen dem Innenumfang des aufgeweiteten Muffenabschnitts des Aufnahme-Endabschnittes und dem Außenumfang des Einsteck-Endabschnittes. In axialer Richtung liegt die Ringdichtung zwischen einander gegenüberliegenden Schulterflächen des aufgeweiteten Muffenabschnittes des Aufnahme-Endabschnittes und des radialen Vorsprungs am Einsteck-Endabschnitt.

Vorzugsweise ist der radiale Vorsprung an dem Einsteck-Endabschnitt durch eine radial nach außen geprägte Sicke, vorzugsweise Kastensicke gebildet.

Gemäß einer Ausführungsform der Erfindung kann es vorgesehen sein, dass die Verbindung zwischen zwei Rohrelementen durch axiales Zusammenstecken erfolgt, wobei die Arretierung der axial zusammengesteckten Rohrelemente beispielsweise durch bajonettverschlussartige Verriegelungsmittel oder dgl. erfolgen kann, sofern die Reibungskraft zwischen den Rohrelementen nicht ausreichen sollte, den Quetschdruck auf eine in dem Dichtungsaufnahmeraum aufgenommene Dichtung dauerhaft aufrechtzuerhalten.

Gemäß einer bevorzugten Ausführungsform der Erfindung sind die Rohrelemente an den betreffenden Endabschnitten jedoch miteinander verschraubbar, so dass durch das Verschrauben der axiale Vortrieb des ersten radialen Vorsprungs relativ zu dem zweiten radialen Vorsprung gesteuert und somit der Druck auf eine in dem Dichtungsaufnahmeraum aufgenommene Ringdichtung aufgebracht werden kann, wobei die Verschraubung eine Sicherung der Verbindung zwischen Einsteck-Endabschnitt des ersten Rohrelementes und Aufnahme-Endabschnitt des zweiten Rohrelementes der betreffenden Rohrelementverbindung gegen axiales Trennen gewährleistet. Gemäß der bevorzugten Ausführungsform der Erfindung ist der Einsteck-Endabschnitt des ersten Rohrelementes mit einem Außengewinde versehen, wohingegen der Aufnahme-Endabschnitt des zweiten Rohrelementes ein mit dem Außengewinde verschraubbares Innengewinde aufweist. Bei diesen Gewinden handelt es sich vorzugsweise um Whitworth-Gewinde, die durch Sicken in den Rohrelementwänden gebildet sind.

Vorzugsweise weisen die Rohrelemente jeweils einen Einsteck-Endabschnitt an einem axialen Ende und einen Aufnahme-Endabschnitt an dem anderen axialen Ende auf, so dass die ersten Rohrelemente und die zweiten Rohrelemente an den axialen Enden im Wesentlichen gleich ausgebildet sind und somit eine Vielzahl solcher Rohrelemente nach dem gleichen Verbindungsprinzip aneinander anschließbar sind.

Die Rohrelemente sind vorzugsweise aus Metall, insbesondere aus Edelstahl, gebildet.

Die Erfindung wird nachstehend unter Bezugnahme auf die Figuren näher erläutert.
Fig. 1 zeigt zwei zylindrische Rohrelemente eines Rohrsystems nach der Erfindung in einer Seitenansicht in axialer Ausrichtung vor der Herstellung einer Verbindung zwischen den beiden Rohrelementen, wobei das untere Rohrelement gebrochen und somit nur unvollständig dargestellt ist.
Fig. 2 zeigt in einer schematischen und gebrochen gezeichneten Längsschnitt-Teildarstellung eine Verbindungsstelle 10 zweier aneinander angeschlossener Rohrelemente.

Die Rohrelemente 3 sind im Wesentlichen identisch aufgebaut und weisen jeweils einen axialen Einsteck-Endabschnitt 5 und einen Aufnahme-Endabschnitt 7 auf. Sämtliche Endabschnitte 5, 7 sind mit Gewinde 9 bzw. 11 versehen und so dimensioniert, dass ein Rohrelement 3 mit seinem Einsteck-Endabschnitt 5 in den Aufnahme-Endabschnitt 7 eines anderen Rohrelementes 3 durch Verschraubung des Außengewindes 9 des Einsteck-Endabschnittes 3 mit dem Innengewinde 11 des Aufnahme-Endabschnittes 7 passend einführbar ist.

Das Rohrelement 3 weist an der Seite seines Aufnahme-Endabschnitts 7 einen muffenartig aufgeweiteten Randabschnitt 13 auf, welcher mit der Ringschulter 15 einen radialen Vorsprung definiert.

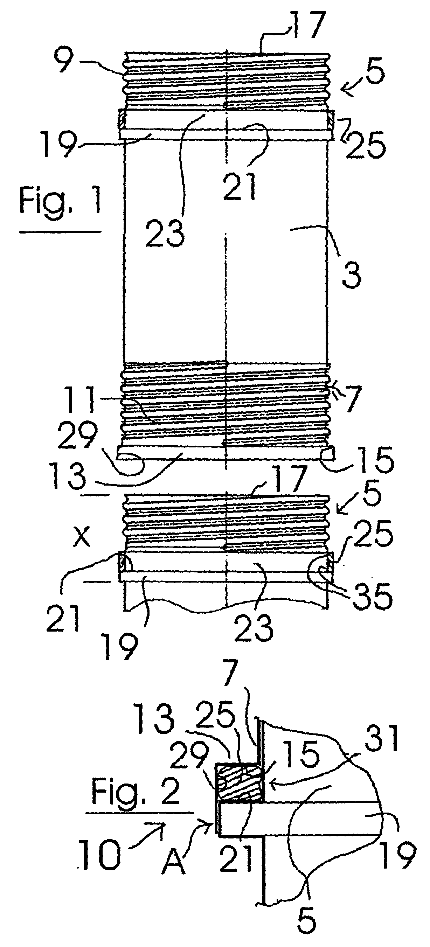

An dem Einsteck-Endabschnitt 5 weist jedes Rohrelement 3 im Abstand x von dem axialen Rand 17 eine radial nach außen geprägte Sicke 19 auf, die mit ihrer Ringschulter 21 einen weiteren radialen Vorsprung bildet. Wie in Fig. 1 erkennbar, sollte eine axial an die Sicke 19 angrenzende Dichtungsaufnahmezone 23 gewindefrei gehalten sein. Im Bereich dieser Dichtungsaufnahmezone 23 sitzt eine Elastomer-Ringdichtung 25 am Umfang des Einsteck-Endabschnittes 5 auf dem Rohrelement 3 auf.

Beim Zusammenschrauben der beiden Rohrelemente 3 in Fig. 3 übergreift der muffenartige Randabschnitt 13 des oberen Rohrelements 3 die Dichtung 25 des unteren Rohrabschnitts 3 an deren radialer Außenseite. Die stirnseitige Öffnung des muffenartig aufgeweiteten Randabschnittes 13 ist groß genug, damit sie die Dichtungsaufnahmezone 23 mit Dichtung 25 aufnehmen kann. Vorzugsweise ist die stirnseitige Öffnung des muffenartig aufgeweiteten Randabschnitts 13 so groß, dass sie bei miteinander verbundenen Rohrelementen 3 auch die betreffende Sicke 19 radial außen übergreifen kann, wie dies in Fig. 2 schematisch angedeutet ist.

Im zusammengeschraubten Zustand bilden die Außenumfangsfläche des Dichtungsaufnahmeabschnitts 23 am Einsteck-Endabschnitt 5 des einen Rohrelements 3 und die Innenumfangsfläche 29 des muffenartig erweiterten Randabschnittes 13 radiale Begrenzungen eines Ringraumes 31, in dem die Dichtung 25 eingesperrt ist. An den axialen Enden ist dieser Ringraum 31 von der in den Figuren nach oben weisenden Ringschulterfläche 21 der Sicke 19 des einen Rohrelements 3 und durch die innere, in den Figuren nach unten weisende Ringschulterfläche 15 des muffenartig aufgeweiteten Randabschnitts 13 begrenzt. Diese Ringschulterflächen 15 und 21 beaufschlagen im zusammengeschraubten Zustand der Endabschnitte 5, 7 die in dem Ringraum 31 eingesperrte Dichtung 25 an deren axial einander abgewandten Seiten. Je weiter der axiale Einsteck-Endabschnitt 5 des einen Rohrelements 3 in den Aufnahme-Endabschnitt 7 des anderen Rohrelements 3 hineingeschraubt wird, desto kleiner wird der Ringraum 31 und desto stärker wird der Quetschdruck auf die Dichtung 25 in dem Ringraum 31. Die Elastomerdichtung 25 kommt dabei in zuverlässig abdichtenden Kontakt mit den Begrenzungsflächen des Ringraums 31, wodurch eine auch unter höheren Drucken gasdichte Verbindung der Rohrelemente 3 an ihrer Verbindungsstelle realisiert ist.

Vorzugsweise ist die Dichtung 25 aufgrund der Formgebung oder/und Materialzusammensetzung so ausgebildet, dass sie eine starke Neigung zur radialen Ausbauchung aufweist, wenn sie in der in Fig. 2 angedeuteten Weise bei 15 und 21 an entgegengesetzten Seiten axial belastet wird. Eine solche Ringdichtung könnte beispielsweise ein U-Profil mit radial nach innen weisenden kurzen Schenkeln 35 haben.

Für Temperaturbereiche bis etwa 200°C wird als Dichtungselement 25 eine Elastomeredichtung empfohlen.

Für Temperaturbereiche oberhalb 200°C kommen vorzugsweise mineralische Dichtungen, keramische Dichtbänder, Graphitschnüre und dgl. als Dichtungen 25 in Frage.

Das druckdichte Schraubverbindungssystem gemäß Fig. 1 bietet den Vorteil, dass im Verbindungszustand zweier Rohre 3 das eine Rohr 3 im Rahmen einer Drehwinkeltoleranz relativ zu dem anderen Rohr 3 verdreht werden kann, ohne die Dichtheit der Verbindungsstelle 10 unzulässig zu beeinträchtigen. Die Gewinde 5 und 7 müssen also nicht auf Anschlag miteinander verschraubt sein, um Dichtheit zu gewährleisten. Eine derartige Drehwinkeltoleranz erleichtert die Montage eines Rohrsystems, insbesondere wenn auch Rohrelemente mit radialen Anschlusselementen oder dgl. in das Rohrsystem einbezogen werden sollen.

Alternativ zu den Gewinden 5 und 7 oder zusätzlich dazu könnten der muffenartig aufgeweitete Randabschnitt 13 mit einem Innengewinde und die Sicke 19 mit einem dazu komplementären Außengewinde ausgestaltet sein, so dass es an der in Fig. 2 bei A angedeuteten Stelle zu einer Verschraubung zweier Rohrelemente 3 kommen könnte.

## Patentansprüche

1. Rohrsystem mit Rohrelementen (3), die in Reihe miteinander verbindbar sind, wobei an der Verbindungsstelle (10) zweier aufeinander folgender Rohrelemente (3) ein erstes der beiden Rohrelemente (3) mit einem axialen Einsteck-Endabschnitt (5) in einen axialen Aufnahme-Endabschnitt (7) des zweiten Rohrelementes (3) eingeführt ist, so dass die Endabschnitte (5, 7) der Rohrelemente (3) im Verbindungsbereich einander radial überlappen,
**dadurch gekennzeichnet,**
**dass** die Rohrelemente (3) so dimensioniert sind, dass sie in dem Bereich radialer Überlappung der axialen Endabschnitte (5, 7) an der Verbindungsstelle (10) mit ihren einander gegenüberliegenden Umfangswänden (23, 29) einen Ringraum (31) zur Aufnahme einer Dichtung (25) begrenzen, wobei der Ringraum (31) axial von einem am Einsteck-Endabschnitt (5) vorgesehenen ersten radialen Vorsprung (21) auf einer Seite und von einem am Aufnahme-Endabschnitt vorgesehenen zweiten radialen Vorsprung (15) auf der anderen Seite begrenzt ist, wobei die radialen Vorsprünge (15, 21) in axialer Richtung einander annäherbar sind, um eine in dem Ringraum (31) aufgenommene Dichtung an entgegengesetzten Seiten mit Druck zu beaufschlagen.

2. Rohrsystem nach Anspruch 1, **dadurch gekennzeichnet, dass** der axiale Aufnahme-Endabschnitt (7) im Bereich des betreffenden axialen Randes des zweiten Rohrelementes (3) unter Bildung oder Einbeziehung des zweiten radialen Vorsprungs (15) zu einem Abschnitt (13) für die radial äußere Begrenzung des Ringraumes (31) aufgeweitet ist und dass der erste radiale Vorsprung (21) mit Abstand vom betreffenden axialen Rand (17) des ersten Rohrelementes (3) an dem Einsteck-Endabschnitt (5) vorgesehen ist.

3. Rohrsystem nach Anspruch 2, **dadurch gekennzeichnet, dass** der erste radiale Vorsprung (21) durch eine radial nach außen geprägte Sicke (19) gebildet ist.

4. Rohrsystem nach einem der vorhergehenden Ansprüche, **gekennzeichnet durch** eine ringförmige Elastomerdichtung (25) für die Abdichtung der Verbindungsstelle (10) zweier in Reihe aneinander angeschlossener Rohrelemente (3) in dem Ringraum (31) zwischen Einsteck-Endabschnitt (5) und Aufnahme-Endabschnitt (7).

5. Rohrsystem nach einem der vorhergehenden Ansprüche, **gekennzeichnet durch** Mittel (9, 11) zur Sicherung der Verbindung zwischen Einsteck-Endabschnitt (5) des ersten Rohrelements (3) und Aufnahme-Endabschnitt (7) des zweiten Rohrelements (3) gegen axiales Trennen.

6. Rohrsystem nach einem der vorhergehenden Ansprüche, **dadurch gekennzeichnet, dass** die Rohrelemente (3, 3) miteinander verschraubbar sind.

7. Rohrsystem nach Anspruch 6, **dadurch gekennzeichnet, dass** der Einsteck-Endabschnitt (5) mit einem Außengewinde (9) versehen ist und dass der Aufnahme-Endabschnitt (7) ein mit dem Außengewinde (9) verschraubbares Innengewinde (11) aufweist.

8. Rohrsystem nach Anspruch 7, **dadurch gekennzeichnet, dass** die Gewinde (9, 11) durch Sicken in den Rohrelementwänden gebildet sind.

9. Rohrsystem nach einem der vorhergehenden Ansprüche, **dadurch gekennzeichnet, dass** das erste Rohrelement (3) und das zweite Rohrelement (3) jeweils einen Einsteck-Endabschnitt (5) an einem axialen Ende und einen Aufnahme-Endabschnitt (7) an dem anderen axialen Ende aufweisen.

10. Rohrsystem nach einem der vorhergehenden Ansprüche, **dadurch gekennzeichnet, dass** die Rohrelemente (3) aus Metall, insbesondere aus Edelstahl bestehen.

## Claims

1. Pipe system comprising pipe elements (3) which can be interconnected in series, wherein at the connection point (10) of two successive pipe elements (3) a first of the two pipe elements (3) is introduced with an axial push-in end section (5) into an axial receiving end section (7) of the second pipe element (3), so that the end sections (5, 7) of the pipe elements (3) radially overlap each other in the connection region,
**characterised in**
**that** the pipe elements (3) are dimensioned so that, with their mutually opposite peripheral walls (23, 29), they define an annular chamber (31) for receiving a seal (25) in the region where the axial end sections (5, 7) radially overlap at the connection point (10), wherein the annular chamber (31) is axially defined by a first radial projection (21) provided on the push-in end section (5) on one side and by a second radial projection (15) provided on the receiving end section on the other side, wherein the radial projections (15, 21) can be brought closer together in the axial direction in order to apply pressure to opposite sides of a seal received in the annular chamber (31).

2. Pipe system according to Claim 1, **characterised in that** the axial receiving end section (7) is widened in the region of the relevant axial edge of the second pipe element (3) while forming or including the second radial projection (15) to produce a section (13) for the radially outer boundary of the annular chamber (31), and that the first radial projection (21) is provided on the push-in end section (5) at a distance from the relevant axial edge (17) of the first pipe element (3).

3. Pipe system according to Claim 2, **characterised in that** the first radial projection (21) is formed by a bead (19) which is embossed radially outwards.

4. Pipe system according to any one of the preceding Claims, **characterised by** an annular elastomer seal (25) for sealing the connection point (10) of two pipe elements (3), joined to one another in series, in the annular chamber (31) between the push-in end section (5) and the receiving section (7).

5. Pipe system according to any one of the preceding Claims, **characterised by** means (9, 11) for securing the connection between the push-in end section (5) of the first pipe element (3) and the receiving end section (7) of the second pipe element (3) against axial separation.

6. Pipe system according to any one of the preceding Claims, **characterised in that** the pipe elements (3, 3) can be screwed together.

7. Pipe system according to Claim 6, **characterised in that** the push-in end section (5) is provided with an external thread (9), and that the receiving end section (7) has an internal thread (11) which can be screwed to the external thread (9).

8. Pipe system according to Claim 7, **characterised in that** the threads (9, 11) are formed by beads in the pipe element walls.

9. Pipe system according to any one of the preceding Claims, **characterised in that** the first pipe element (3) and the second pipe element (3) in each case have a push-in end section (5) at one axial end and a receiving end section (7) at the other axial end.

10. Pipe system according to any one of the preceding Claims, **characterised in that** the pipe elements (3) consist of metal, in particular of special steel.

## Revendications

1. Système de tubes avec des éléments tubulaires (3) qui peuvent être reliés en série les uns aux autres, dans lequel, au niveau du point de jonction (10) de deux éléments tubulaires successifs (3), un premier des deux éléments tubulaires (3) est introduit avec une section d'extrémité axiale d'enfoncement (5) dans une section d'extrémité axiale de réception (7) du deuxième élément tubulaire (3), de sorte que les sections d'extrémité (5, 7) des éléments tubulaires (3) se chevauchent radialement dans la zone de jonction,
**caractérisé en ce que** les éléments tubulaires (3) sont dimensionnés de telle manière que, dans la zone de chevauchement radial des sections d'extrémité axiales (5, 7) au niveau du point de jonction (10), elles délimitent avec leurs parois circonférentielles mutuellement opposées (23, 29) un espace annulaire (31) destiné à recevoir un joint (25), l'espace annulaire (31) étant limité axialement d'un côté par une première saillie radiale (21) prévue sur la section d'extrémité d'enfoncement (5) et de l'autre côté par une deuxième saillie radiale (15) prévue sur la section d'extrémité de réception, les saillies radiales (15, 21) pouvant être rapprochées l'une de l'autre dans la direction axiale afin de charger sous pression un joint placé dans l'espace annulaire (31) sur des faces opposées.

2. Système de tubes selon la revendication 1, **caractérisé en ce que** la section d'extrémité axiale de réception (7) est élargie au niveau du bord axial concerné du deuxième élément tubulaire (3) en formant ou en intégrant la deuxième saillie radiale (15) pour former une section (13) pour la délimitation radialement extérieure de l'espace annulaire (31), et **en ce que** la première saillie radiale (21) est prévue sur la section d'extrémité d'enfoncement (5) à distance du bord axial concerné (17) du premier élément tubulaire (3).

3. Système de tubes selon la revendication 2, **caractérisé en ce que** la première saillie radiale (21) est formée par une moulure (19) estampée radialement vers l'extérieur.

4. Système de tubes selon l'une des revendications précédentes, **caractérisé par** un joint élastomère annulaire (25) pour l'étanchéité du point de jonction (10) de deux éléments tubulaires (3) raccordés en série l'un à l'autre dans l'espace annulaire (31) entre la section d'extrémité d'enfoncement (5) et la section d'extrémité de réception (7).

5. Système de tubes selon l'une des revendications précédentes, **caractérisé par** des moyens (9, 11) pour immobiliser contre une séparation axiale la liaison entre la section d'extrémité d'enfoncement (5) du premier élément tubulaire (3) et la section d'extrémité de réception (7) du deuxième élément tubulaire (3).

6. Système de tubes selon l'une des revendications précédentes, **caractérisé en ce que** les éléments tubulaires (3, 3) sont vissables l'un à l'autre.

7. Système de tubes selon la revendication 6, **caractérisé en ce que** la section d'extrémité d'enfoncement (5) est munie d'un filetage extérieur (9) et **en ce que** la section d'extrémité de réception (7) présente un filetage intérieur (11) pouvant se visser au filetage extérieur (9).

8. Système de tubes selon la revendication 7, **caractérisé en ce que** les filetages (9, 11) sont formés par des moulures dans les parois des éléments tubulaires.

9. Système de tubes selon l'une des revendications précédentes, **caractérisé en ce que** le premier élément tubulaire (3) et le deuxième élément tubulaire (3) présentent chacun une section d'extrémité d'enfoncement (5) et une section d'extrémité de réception (7) au niveau de leurs extrémités axiales.

10. Système de tubes selon l'une des revendications précédentes, **caractérisé en ce que** les éléments tubulaires (3) sont constitués de métal, en particulier d'acier spécial.
